(19) Europäisches Patentamt
European Patent Office
Office européen des brevets

(11) **EP 4 249 872 B1**

## (12) EUROPEAN PATENT SPECIFICATION

(45) Date of publication and mention
of the grant of the patent:
**31.07.2024 Bulletin 2024/31**

(21) Application number: **23162290.3**

(22) Date of filing: **16.03.2023**

(51) International Patent Classification (IPC):
*G01K 3/00* (2006.01)  *G01K 7/22* (2006.01)
*B60L 53/16* (2019.01)  *B60L 53/302* (2019.01)
*B60L 53/62* (2019.01)  *H01R 13/66* (2006.01)

(52) Cooperative Patent Classification (CPC):
**G01K 3/005; B60L 53/16; B60L 53/302;
B60L 53/62; G01K 7/22;** H01R 13/6683;
Y02T 10/70; Y02T 10/7072

(54) **METHOD AND APPARATUS FOR DETERMINING ELECTRIC VEHICLE CHARGING INLET TERMINAL TEMPERATURE**

VERFAHREN UND VORRICHTUNG ZUR BESTIMMUNG DER LADEEINLASSTEMPERATUR EINES ELEKTROFAHRZEUGS

PROCÉDÉ ET APPAREIL POUR DÉTERMINER LA TEMPÉRATURE D'UNE BORNE D'ENTRÉE DE CHARGE DE VÉHICULE ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.03.2022 US 202263322408 P
15.03.2023 US 202318121665**

(43) Date of publication of application:
**27.09.2023 Bulletin 2023/39**

(73) Proprietor: **Aptiv Technologies AG
8200 Schaffhausen (CH)**

(72) Inventors:
• **MATHEWS, Thomas
Cortland, 44410 (US)**
• **PHIFER, Michael L.
Warren, 44486 (US)**

(74) Representative: **Westphal, Mussgnug & Partner,
Patentanwälte mbB
Werinherstraße 79
81541 München (DE)**

(56) References cited:
**US-A1- 2020 343 675**

## Description

This disclosure is directed to a method and apparatus for determining charging inlet terminal temperature, e.g., for electric vehicles.

Vehicle charging inlets are used to connect an electric vehicle to an external electrical power source in order to recharge the batteries in the electric vehicle. The charging inlet may be configured to conduct alternating current (AC) direct current (DC) or a combination of the two. Vehicle charging inlets may use one or more thermal sensors, e.g., thermistors, to monitor the temperature of inlet electrical terminals. The thermal sensors are positioned in proximity to the inlet terminals that are being monitored and once the thermal sensors register a temperature equal to a fixed temperature threshold vehicle charging current is reduced or is shut off to prevent an overheating condition. For example, the fixed temperature threshold may be 90°C. Once the thermal sensors register this temperature vehicle charging current is automatically reduced or shut off. Existing methods of using thermal sensors for monitoring temperature of inlet terminals do not factor in the terminal! thermal sensors temperature transient response or offset/delay between the thermal sensor's measurement and the actual terminal temperatures. A primary disadvantage is that existing methods may not be able to detect or prevent potential thermal runaway events, if for example, a faulty charge coupler is used or if there is a high resistance connection due to the difference between the measured temperature and the actual terminal temperature because of transient response, delay, or offset.

Publication US 2020/343675 A1 is considered to be relevant to the present application and discloses a method for monitoring the temperature of a plug connector / contact pin during charging of the battery of an electric vehicle, comprising determining the temporal change in the temperature gradient between two measurement regions separated by a known distance, calculating the heat flow, determining a predicted value for the temperature of the contact zone, and comparing the predicted value to an overheating threshold.

The problem underlying the present application is solved by a method having the features of claim 1, a computer readable medium having the features of claim 5, as well as by an electric vehicle charging system having the features of claim 8.

## BRIEF DESCRIPTION OF THE DRAWINGS

The present invention will now be described by way of example with reference to the accompanying drawings, in which:

> FIG. 1 illustrates an isometric view of a charging inlet according to some embodiments;
> FIG. 2 illustrates schematic diagram of the charging inlet of FIG. 1 according to some embodiments; and
> FIG. 3 illustrates an overview of a flow chart for a method of determining charging inlet terminal temperature according to some embodiments.

## DETAILED DESCRIPTION

This disclosure describes a method of determining the temperature of an inlet terminal based on a temperature sensor located near the inlet terminal. The determined inlet terminal temperature is used to regulate the electrical power that the charging inlet receives from an electric vehicle charger.

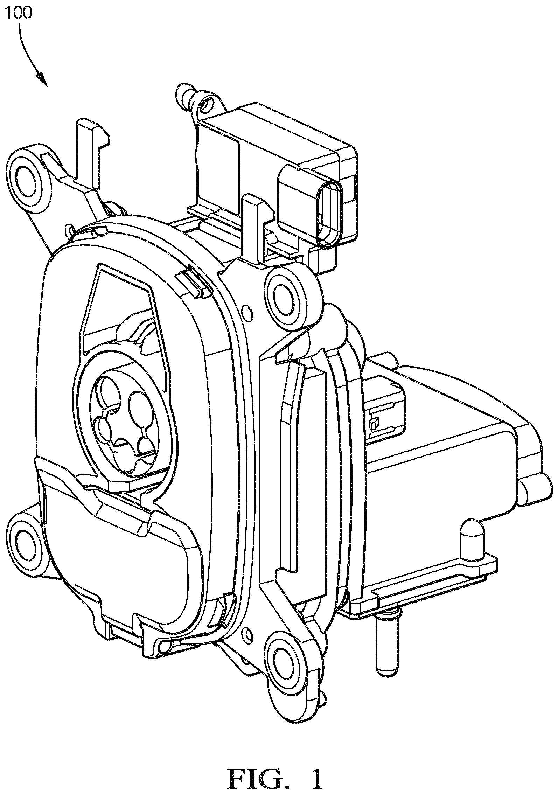

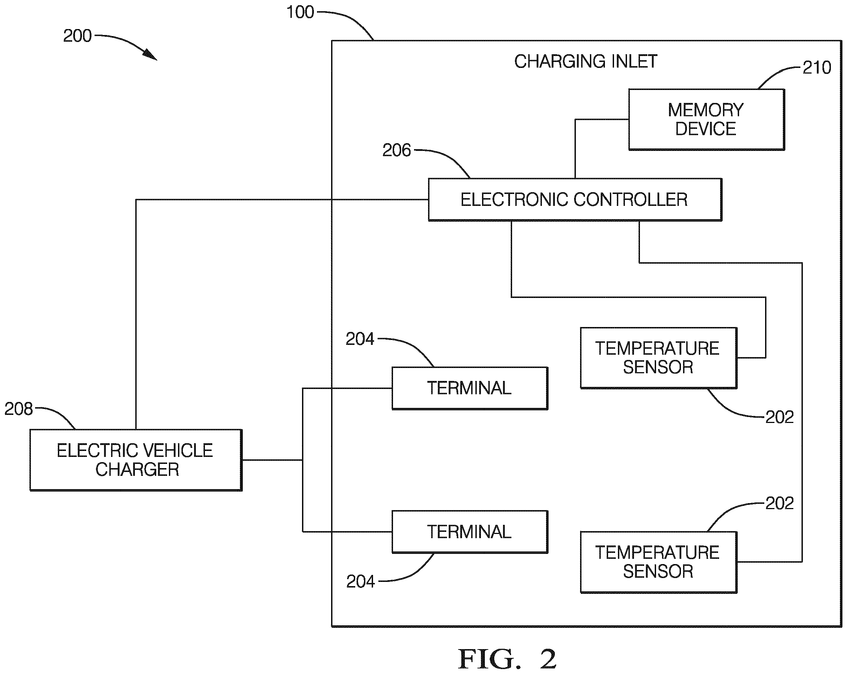

A nonlimiting example of a charging inlet 100 is illustrated in FIG. 1 and a non-limiting example of an electric vehicle charging system 200 which includes the charging inlet 100 is illustrated in FIG. 2. The charging inlet 100 has one or more temperature sensors 202 that are configured to measure the temperature of one or more inlet terminals 204 of the charging inlet 100. The charging inlet 100 also includes an electronic controller 206 which is configured to:

- obtain an initial temperature value of the temperature sensor 202 prior to application of electrical power to the inlet terminal by an electric vehicle charger 208,

- obtain a current temperature value of the temperature sensors 202 at a time after application of electrical power to the inlet terminal by the electric vehicle charger 208,

- calculate the inlet terminal temperature of the inlet terminals 204 based on the initial temperature value, the current temperature value, a predetermined temperature sensor normalization factor, and a predetermined terminal normalization factor for the time after application of electrical power to the inlet terminal 204, and

- regulate the application of electrical power by the electric vehicle charger 208 to the inlet terminals 204 to maintain the inlet terminal temperature below a predetermined temperature threshold, e.g., 90°C, based on the calculated inlet terminal temperature. For example, the electronic controller 206 may command the electric vehicle charger 208 to reduce the electrical power supplied to the charging inlet 100 if the calculated inlet terminal temperature is approaching the predetermined temperature threshold. In another example, the electronic controller 206 may command the electric vehicle charger 208 to increase the electrical power supplied to the charging inlet 100 if the calculated inlet terminal temperature is significantly lower than the predetermined temperature threshold in order to reduce charging time.

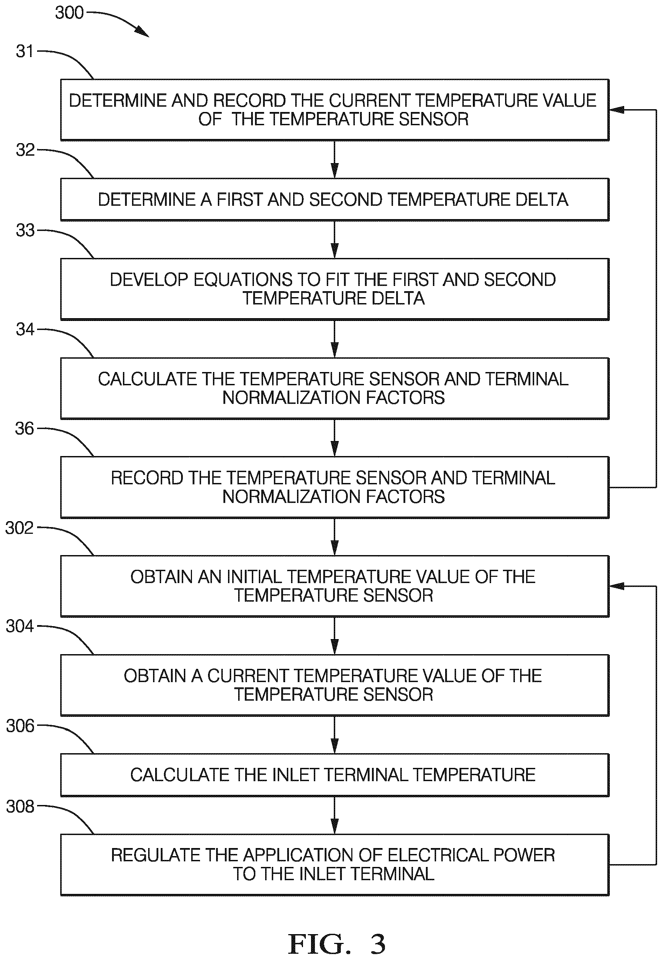

A non-limiting example of a method 300 of determining an inlet terminal temperature of an electric vehicle charging inlet that uses an electronic controller in conjunction with a temperature sensor is described herein. Typically, a negative temperature coefficient (NTC) thermistor is in electrical communication with the electronic controller. The method 300 accounts for factors such as ambient temperature and a time interval between temperature measurements. The method 300 illustrated in FIG. 3 includes at least the following steps:

STEP 302, OBTAIN AN INITIAL TEMPERATURE VALUE OF A TEMPERATURE SENSOR, includes obtaining an initial temperature value of a temperature sensor 202 configured to measure the temperature of an inlet terminal 204 of the electric vehicle charging inlet 100 that is located in proximity to the inlet terminal 204. The electronic controller 206 may obtain a resistance value from the temperature sensor 202 prior to application of electrical power to the inlet terminal 204 by the electric vehicle charger 208 and calculate the initial temperature value of the temperature sensor 202 based on that resistance value. The temperature sensor 202 may be a negative temperature coefficient (NTC) thermistor;

STEP 304, OBTAIN A CURRENT TEMPERATURE VALUE OF THE TEMPERATURE SENSOR, includes obtaining a current temperature value of the temperature sensor 202 via the electronic controller 206 at a time after application of electrical power to the inlet terminal 204 by the electric vehicle charger 208;

STEP 306, CALCULATE THE INLET TERMINAL TEMPERATURE, includes calculating the inlet terminal temperature using the electronic controller 206 based on the initial temperature value, the current temperature value, a predetermined temperature sensor normalization factor, and a predetermined terminal normalization factor stored in a memory device 210 that is in electronic communication with the electronic controller 206 for the time after application of electrical power to the inlet terminal 204 by the electric vehicle charger 208; and

STEP 308, REGULATE THE APPLICATION OF ELECTRICAL POWER TO THE INLET TERMINAL, includes regulating the application of electrical power to the inlet terminal 204 by the electric vehicle charger 208 using the electronic controller 206 to maintain the inlet terminal temperature below a predetermined threshold based on the calculated inlet terminal temperature.

According to the claimed invention, the inlet terminal temperature is calculated by the electronic controller 206 using the formula in Equation 1 below:

$$T_{terminal}(t) = T_{sensor}(t_0) + \left( \frac{T_{sensor}(t) - T_{sensor}(t_0)}{NF_{sensor}(t)} \right) * NF_{terminal}(t), \qquad \text{Eq. 1}$$

wherein $T_{terminal}(t)$ is the inlet terminal temperature, $T_{sensor}(t_0)$ is the initial temperature value of the temperature sensor 202, i.e., ambient temperature, $T_{sensor}(t)$ is the current temperature value of the temperature sensor 202, $NF_{sensor}(t)$ is the temperature sensor normalization factor, and $NF_{terminal}(t)$ is the terminal normalization factor. Steps 302 through 308 may be repeated at a regular time interval for the entire time that the electric vehicle charger 208 is supplying electrical power to the charging inlet 100.

According to the claimed invention, the time series of the temperature sensor normalization factors is previously derived based on experimental simultaneous measurements of the current temperature value from the temperature sensor 202 and the inlet terminal temperature to derive the temperature sensor and terminal normalization factors. Therefore, the method may further include the following steps that are performed prior to STEP 302:

STEP 31, DETERMINE AND RECORD THE CURRENT TEMPERATURE VALUE OF THE TEMPERATURE SENSOR, includes determining the current temperature value of the temperature sensor 202 using the Steinhart-Hart equation in Equation 2 below the case where the temperature sensor 202 is a NTC thermistor. This determination is made over a time period starting at an initial time ($t_0$) as electrical power is applied to the inlet terminal 204, preferably consistently applying the electrical power at or near the maximum power rating of the charging inlet 100.

STEP 31 also includes recording the current temperature value of the temperature sensor 202 over the time period starting at the initial time ($t_0$). A measured value of the inlet terminal temperature is recorded over the time period starting at the initial time ($t_0$) simultaneously with determining the current temperature value of the temperature sensor 202.

$$\frac{1}{T} = A_1 + B_2 \ln\left(\frac{R}{R_{25}}\right) + C_2 ln^2\left(\frac{R}{R_{25}}\right) + D_1 ln^3\left(\frac{R}{R_{25}}\right) \qquad \text{Eq. 2}$$

where R is the current thermistor resistance, $R_{25}$ is the thermistor resistance at 25°C, and $A_1$, $B_2$, $C_2$, and $D_1$ are characteristics of the particular NTC thermistor;

STEP 32, DETERMINE A FIRST AND SECOND TEMPERATURE DELTA, includes determining a first temperature delta between the recorded temperature values of the NTC thermistor over the time period and the recorded temperature value of the temperature sensor 202 at the initial time ($t_0$) and determining a second temperature delta between the measured value of the inlet terminal temperature over the time period and the measured value of the inlet terminal temperature at the initial time ($t_0$);

STEP 33, DEVELOP EQUATIONS TO FIT THE FIRST AND SECOND TEMPERATURE DELTA DATA, includes developing equations, such as a Foster RC model equation (see Equation 3 below) or a Cauer RC model equation, to fit the first and second temperature delta data by determining coefficients for a thermal resistance and a time constant for the temperature sensor 202 and the inlet terminal 204.

$$RT(t) = R_1(t)\left(1 - e^{\left(\frac{-t}{\tau_1}\right)}\right) + R_2(t)\left(1 - e^{\left(\frac{-t}{\tau_2}\right)}\right) + R_3(t)\left(1 - e^{\left(\frac{-t}{\tau_3}\right)}\right) +$$
$$R_4(t)\left(1 - e^{\left(\frac{-t}{\tau_4}\right)}\right) \text{Eq. 3};$$

STEP 34, SELECT AN APPROPRIATE TIME STEP INCREMENT, includes selecting an appropriate time step increment for determining the first and second temperature delta data and for determining the coefficients for the thermal resistance and time constant for the temperature sensor 202 and the inlet terminal 204;

STEP 35, CALCULATE THE TEMPERATURE SENSOR AND TERMINAL NORMALIZATION FACTORS, includes calculating the temperature sensor normalization factor $NF_{sensor}(t)$ and the terminal normalization factor $NF_{terminal}(t)$ by dividing each of the first and second temperature delta datum by a steady state response value of the temperature sensor 202; and

STEP 36, RECORD THE TEMPERATURE SENSOR AND TERMINAL NORMALIZATION FACTORS, includes recording the temperature sensor normalization factor $NF_{sensor}(t)$ and the terminal normalization factor $NF_{terminal}(t)$ for each time step increment. STEPS 31 through 36 are repeated for a time period, for example until the first temperature delta reaches a steady state.

The inlet terminal 204 may conduct an alternating current or a direct current after the application of electrical power to the inlet terminal 204.

The predicated AC and/or DC terminal temperature is then used as an input to the vehicle charging control strategy.

**Claims**

1. A method (300) for determining an inlet terminal temperature of an electric vehicle charging inlet (100) using an electronic controller (206), comprising:

   obtaining an initial temperature value of a temperature sensor (202) configured to measure the temperature of an inlet terminal (204) of the electric vehicle charging inlet (100) via the electronic controller (206) prior to application of electrical power to the inlet terminal (204);

obtaining a current temperature value of the temperature sensor (202) via the electronic controller (206) at a time after application ($t_0$) of electrical power to the inlet terminal (204);

calculating the inlet terminal temperature using the electronic controller (206) based on the initial temperature value, the current temperature value, a predetermined temperature sensor normalization factor, and a predetermined terminal normalization factor stored in a memory device (210) that is in electronic communication with the electronic controller (206) for the time after application of electrical power to the inlet terminal (204); and

regulating the application of electrical power to the inlet terminal (204) using the electronic controller (206) to maintain the inlet terminal temperature below a predetermined threshold based on the calculated inlet terminal temperature,

wherein a time series of the temperature sensor normalization factors is previously derived based on experimental simultaneous measurements of the current temperature value from the temperature sensor (202) and the inlet terminal temperature, and

wherein the inlet terminal (204) temperature is calculated by the electronic controller (206) using the formula:

$$T_{terminal}(t) = T_{sensor}(t_0) + \left( \frac{T_{sensor}(t) - T_{sensor}(t_0)}{NF_{sensor}(t)} \right) * NF_{terminal}(t),$$

wherein $T_{terminal}(t)$ is the inlet terminal temperature, $T_{sensor}(t_0)$ is the initial temperature value of the temperature sensor (202), $T_{sensor}(t)$ is the current temperature value of the temperature sensor (202), $NF_{sensor}(t)$ is the temperature sensor normalization factor, and $NF_{terminal}(t)$ is the terminal normalization factor.

2. The method (300) according to claim 1, wherein the temperature sensor (202) is a negative temperature coefficient (NTC) thermistor, wherein the method (300) further comprises:

determining and recording the current temperature value of the NTC thermistor using the Steinhart-Hart equation while simultaneously recording a measured value of the inlet terminal temperature over a time period starting at an initial time ($t_0$) as electrical power is applied to the inlet terminal (204);

determining a first temperature delta between the recorded temperature values of the NTC thermistor over the time period and the recorded temperature value of the NTC thermistor at the initial time ($t_0$) and determining a second temperature delta between the measured value of the inlet terminal temperature over the time period and the measured value of the inlet terminal temperature at the initial time ($t_0$);

developing a RC model equation to fit the first and second temperature delta data by determining coefficients for a thermal resistance and a time constant for the NTC thermistor and the inlet terminal (204);

selecting an appropriate time step increment for determining the first and second temperature delta data and for determining the coefficients for the thermal resistance and time constant for the NTC thermistor and the inlet terminal (204);

calculating the temperature sensor normalization factor and the terminal normalization factor by dividing each of the first and second temperature delta datum by a steady state response value of the NTC thermistor; and

recording the temperature sensor normalization factor and the terminal normalization factor for each time step increment.

3. The method (300) according to claim 1, wherein the inlet terminal (204) conducts an alternating current after the application of electrical power to the inlet terminal (204).

4. The method (300) according to claim 1, wherein the inlet terminal (204) conducts a direct current after the application of electrical power to the inlet terminal (204).

5. A computer readable medium containing program instructions for determining an inlet terminal temperature of an electric vehicle charging inlet (100), wherein execution of the program instructions by one or more processors of a computer system causes the one or more processors to carry out the steps of:

obtaining an initial temperature value of a temperature sensor (202) configured to measure the temperature of an inlet terminal (204) of the electric vehicle charging inlet (100) prior to application of electrical power to the inlet terminal (204);

obtaining a current temperature value of the temperature sensor (202) at a time after application of electrical power to the inlet terminal (204);

calculating the inlet terminal temperature of an electric vehicle charging inlet (100) based on the initial temperature value, the current temperature value, a predetermined temperature sensor normalization factor, and a predetermined terminal normalization factor for the time after application of electrical power to the inlet terminal (204), wherein the temperature sensor normalization factor is contained in the computer readable medium; and regulating the application of electrical power to the inlet terminal (204) to maintain the inlet terminal temperature below a predetermined temperature threshold based on the calculated inlet terminal temperature, wherein a time series of the temperature sensor normalization factors is previously derived based on experimental simultaneous measurements of the current temperature value from the temperature sensor (202) and the inlet terminal temperature, and wherein the inlet terminal (204) temperature is calculated by the electronic controller (206) using the formula:

$$T_{terminal}(t) = T_{sensor}(t_0) + \left(\frac{T_{sensor}(t) - T_{sensor}(t_0)}{NF_{sensor}(t)}\right) * NF_{terminal}(t),$$

wherein $T_{terminal}(t)$ is the inlet terminal temperature, $T_{sensor}(t_0)$ is the initial temperature value of the temperature sensor (202), $T_{sensor}(t)$ is the current temperature value of the temperature sensor (202), $NF_{sensor}(t)$ is the temperature sensor normalization factor, and $NF_{terminal}(t)$ is the terminal normalization factor.

6. The computer readable medium according to claim 5, wherein a time series of the predetermined temperature sensor normalization factors and the terminal normalization factors are contained in the computer readable medium.

7. The computer readable medium according to claim 6, wherein the program instructions, the predetermined temperature sensor normalization factors, the terminal normalization factors, and the predetermined temperature threshold are contained in a nonvolatile portion of the computer readable medium.

8. An electric vehicle charging system (200), comprising:

a temperature sensor (202) configured to measure the temperature of an inlet terminal (204) of an electric vehicle charging inlet (100); and
an electronic controller (206) configured to:

obtain an initial temperature value of the temperature sensor (202) prior to application of electrical power to the inlet terminal (204),
obtain a current temperature value of the temperature sensor (202) at a time after application of electrical power to the inlet terminal (204),
calculate the inlet terminal temperature of the inlet terminal (204) based on the initial temperature value, the current temperature value, a predetermined temperature sensor normalization factor, and a predetermined terminal normalization factor for the time after application of electrical power to the inlet terminal (204), and
regulate the application of electrical power to the inlet terminal (204) to maintain the inlet terminal temperature below a predetermined temperature threshold based on the calculated inlet terminal temperature,

wherein a time series of the temperature sensor normalization factors is previously derived based on experimental simultaneous measurements of the current temperature value from the temperature sensor (202) and the inlet terminal temperature, and
wherein the inlet terminal (204) temperature is calculated by the electronic controller (206) using the formula:

$$T_{terminal}(t) = T_{sensor}(t_0) + \left(\frac{T_{sensor}(t) - T_{sensor}(t_0)}{NF_{sensor}(t)}\right) * NF_{terminal}(t),$$

wherein $T_{terminal}(t)$ is the inlet terminal temperature, $T_{sensor}(t_0)$ is the initial temperature value of the temperature sensor (202), $T_{sensor}(t)$ is the current temperature value of the temperature sensor (202), $NF_{sensor}(t)$ is the temperature sensor normalization factor, and $NF_{terminal}(t)$ is the terminal normalization factor.

9. The electric vehicle charging system (200) according to claim 8, wherein the inlet terminal (204) conducts an alternating current after the application of electrical power to the inlet terminal (204).

**10.** The electric vehicle charging system (200) according to claim 8, the inlet terminal (204) conducts a direct current after the application of electrical power to the inlet terminal (204).

**Patentansprüche**

**1.** Verfahren (300) zum Bestimmen einer Einlassterminaltemperatur eines Elektrofahrzeug-Ladeeinlasses (100) unter Verwendung einer elektronischen Steuerung (206), umfassend:

Erhalten eines Anfangstemperaturwerts eines Temperatursensors (202), der zum Messen der Temperatur eines Einlassterminals (204) des Elektrofahrzeug-Ladeeinlasses (100) über die elektronische Steuerung (206) konfiguriert ist, bevor Elektroenergie an das Einlassterminal (204) angelegt wird;
Erhalten eines Ist-Temperaturwerts des Temperatursensors (202) über die elektronische Steuerung (206) zu einem Zeitpunkt nach dem Anlegen ($t_0$) der Elektroenergie an das Einlassterminal (204);
Berechnen der Einlassterminaltemperatur unter Verwendung der elektronischen Steuerung (206) basierend auf dem Anfangstemperaturwert, dem Ist-Temperaturwert, einem vorbestimmten Temperatursensor-Normalisierungsfaktor und einem vorbestimmten Terminal-Normalisierungsfaktor, der in einer Speichervorrichtung (210) gespeichert ist, die mit der elektronischen Steuerung (206) in elektronischer Kommunikation ist, für die Zeit nach dem Anlegen von Elektroenergie an das Einlassterminal (204); und
Regeln des Anlegens von Elektrroenergie an das Einlassterminal (204) unter Verwendung der elektronischen Steuerung (206), um die Einlassterminaltemperatur unter einem vorbestimmten Schwellenwert basierend auf der berechneten Einlassterminaltemperatur zu halten,
wobei zuvor eine Zeitreihe der Temperatursensor-Normalisierungsfaktoren basierend auf gleichzeitigen experimentellen Messungen des Ist-Temperaturwerts von dem Temperatursensor (202) und der Einlassterminaltemperatur abgeleitet wird, und
wobei die Einlassterminaltemperatur (204) von der elektronischen Steuerung (206) unter Verwendung der folgenden Formel berechnet wird:

$$T_{Terminal}(t) = T_{Sensor}(t_0) + \left( \frac{T_{Sensor}(t) - T_{Sensor}(t_0)}{NF_{Sensor}(t)} \right) * NF_{Terminal}(t),$$

wobei $T_{Terminal}(t)$ die Einlassterminaltemperatur, $T_{sensor}(t_0)$ der Anfangstemperaturwert des Temperatursensors (202), $T_{Sensor}(t)$ der Ist-Temperaturwert des Temperatursensors (202), $NF_{sensor}(t)$ der Temperatursensor-Normalisierungsfaktor und $NF_{Terminal}(t)$ der Terminal-Normalisierungsfaktor ist.

**2.** Verfahren (300) nach Anspruch 1, wobei der Temperatursensor (202) ein NTC-Thermistor ist, wobei das Verfahren (300) ferner umfasst:

Bestimmen und Erfassen des aktuellen Temperaturwerts des NTC-Thermistors unter Verwendung der Steinhart-Hart-Gleichung bei gleichzeitiger Erfassung eines Messwertes der Einlassterminaltemperatur über einen zu einem Anfangszeitpunkt beginnenden Zeitraum ($t_0$) während Elektroenergie an das Einlassterminal (204) angelegt wird;
Bestimmen eines ersten Temperaturdeltas zwischen den erfassten Temperaturwerten des NTC-Thermistors im Zeitverlauf und dem erfassten Temperaturwert des NTC-Thermistors zum Anfangszeitpunkt ($t_0$) und Bestimmen eines zweiten Temperaturdeltas zwischen dem Messwert der Einlassterminaltemperatur im Zeitverlauf und dem Messwert der Einlassterminaltemperatur zum Anfangszeitpunkt ($t_0$);
Entwickeln einer RC-Modellgleichung zum Anpassen der ersten und zweiten Temperaturdeltadaten durch Bestimmen von Koeffizienten für einen thermischen Widerstand und einer Zeitkonstante für den NTC-Thermistor und das Einlassterminal (204) ;
Auswählen eines geeigneten Zeitschrittinkrements zum Bestimmen der ersten und zweiten Temperaturdeltadaten und zum Bestimmen der Koeffizienten für den thermischen Widerstand und die Zeitkonstante für den NTC-Thermistor und das Einlassterminal (204);
Berechnen des Temperatursensor-Normalisierungsfaktors und des Terminal-Normalisierungsfaktors durch Division der ersten und zweiten Temperaturdeltadaten durch einen stationären Ansprechwert des NTC-Thermistors; und
Erfassen des Temperatursensor-Normalisierungsfaktors und des Terminal-Normalisierungsfaktors für jedes Zeitschrittinkrement.

3. Verfahren (300) nach Anspruch 1, wobei das Einlassterminal (204) nach dem Anlegen von Elektroenergie an das Einlassterminal (204) einen Wechselstrom leitet.

4. Verfahren (300) nach Anspruch 1, wobei das Einlassterminal (204) nach dem Anlegen von Elektroenergie an das Einlassterminal (204) einen Gleichstrom leitet.

5. Computerlesbares Medium, das Programmanweisungen zum Bestimmen einer Einlassterminaltemperatur eines Elektrofahrzeug-Ladeeinlasses (100), wobei Ausführen der Programmanweisungen durch einen oder mehrere Prozessoren eines Computersystems den einen oder die mehreren Prozessoren veranlasst, die folgenden Schritte auszuführen:

   Erhalten eines Anfangstemperaturwerts eines Temperatursensors (202), der zum Messen der Temperatur eines Einlassterminals (204) des Elektrofahrzeug-Ladeeinlasses (100) konfiguriert ist, bevor Elektroenergie an das Einlassterminal (204) angelegt wird;
   Erhalten eines Ist-Temperaturwerts des Temperatursensors (202) zu einem Zeitpunkt nach dem Anlegen der Elektroenergie an das Einlassterminal (204);
   Berechnen der Einlassterminaltemperatur eines Elektrofahrzeug-Ladeeinlasses (100) basierend auf dem Anfangstemperaturwert, dem Ist-Temperaturwert, einem vorbestimmten Temperatursensor-Normalisierungsfaktor und einem vorbestimmten Terminal-Normalisierungsfaktor für die Zeit nach dem Anlegen von Elektroenergie an das Einlassterminal (204), wobei der Temperatursensor-Normalisierungsfaktor in dem computerlesbaren Medium enthalten ist; und
   Regeln des Anlegens von Elektroenergie an das Einlassterminal (204), um die Einlassterminaltemperatur unter einem vorbestimmten Schwellenwert basierend auf der berechneten Einlassterminaltemperatur zu halten,
   wobei zuvor eine Zeitreihe der Temperatursensor-Normierungsfaktoren basierend auf gleichzeitigen experimentellen Messungen des Ist-Temperaturwerts von dem Temperatursensor (202) und der Einlassterminaltemperatur abgeleitet wird, und
   wobei die Einlassterminaltemperatur (204) von der elektronischen Steuerung (206) unter Verwendung der folgenden Formel berechnet wird:

$$T_{Terminal}(t) = T_{Sensor}(t_0) + \left(\frac{T_{Sensor}(t) - T_{Sensor}(t_0)}{NF_{Sensor}(t)}\right) * NF_{Terminal}(t),$$

   wobei $T_{Terminal}(t)$ die Einlassterminaltemperatur, $T_{Sensor}(t_0)$ der Anfangstemperaturwert des Temperatursensors (202), $T_{Sensor}(t)$ der Ist-Temperaturwert des Temperatursensors (202), $NF_{sensor}(t)$ der Temperatursensor-Normalisierungsfaktor und $NF_{Terminal}(t)$ der Terminal-Normalisierungsfaktor ist.

6. Computerlesbares Medium nach Anspruch 5, wobei in dem computerlesbaren Medium eine Zeitreihe der vorbestimmten Temperatursensor-Normalisierungsfaktoren und der Terminal-Normalisierungsfaktoren enthalten sind.

7. Computerlesbares Medium nach Anspruch 6, wobei die Programmanweisungen, die vorbestimmten Temperatursensor-Normalisierungsfaktoren, die Terminal-Normalisierungsfaktoren und der vorbestimmte Temperaturschwellenwert in einem nichtflüchtigen Abschnitt des computerlesbaren Mediums enthalten sind.

8. Elektrofahrzeug-Ladesystem (200), umfassend:

   einen Temperatursensor (202), der zum Messen der Temperatur eines Einlassterminals (204) eines Elektrofahrzeug-Ladeeinlasses (100) konfiguriert ist; und
   eine elektronische Steuerung (206), die konfiguriert ist zum:

      Erhalten eines Anfangstemperaturwerts des Temperatursensors (202) vor dem Anlegen von Elektroenergie an das Einlassterminal (204),
      Erhalten eines Ist-Temperaturwerts des Temperatursensors (202) zu einem Zeitpunkt nach dem Anlegen von Elektroenergie an das Einlassterminal (204);
      Berechnen der Einlassterminaltemperatur des Einlassterminals (204) basierend auf dem Anfangstemperaturwert, dem Ist-Temperaturwert, einem vorbestimmten Temperatursensor-Normalisierungsfaktor und einem vorbestimmten Terminal-Normalisierungsfaktor für die Zeit nach dem Anlegen von Elektroenergie an das Einlassterminal (204), wobei der Temperatursensor-Normalisierungsfaktor in dem computerlesbaren Medium enthalten ist; und

Regeln des Anlegens von Elektroenergie an das Einlassterminal (204), um die Einlassterminaltemperatur unter einem vorbestimmten Schwellenwert basierend auf der berechneten Einlassterminaltemperatur zu halten,

wobei zuvor eine Zeitreihe der Temperatursensor-Normalisierungsfaktoren basierend auf gleichzeitigen experimentellen Messungen des Ist-Temperaturwerts von dem Temperatursensor (202) und der Einlassterminaltemperatur abgeleitet wird, und

wobei die Einlassterminaltemperatur (204) von der elektronischen Steuerung (206) unter Verwendung der folgenden Formel berechnet wird:

$$T_{Terminal}(t) = T_{Sensor}(t_0) + \left(\frac{T_{Sensor}(t) - T_{Sensor}(t_0)}{NF_{Sensor}(t)}\right) * NF_{Terminal}(t),$$

wobei $T_{Terminal}(t)$ die Einlassterminaltemperatur, $T_{Sensor}(t_0)$ der Anfangstemperaturwert des Temperatursensors (202), $T_{Sensor}(t)$ der Ist-Temperaturwert des Temperatursensors (202), $NF_{Sensor}(t)$ der Temperatursensor-Normalisierungsfaktor und $NF_{Terminal}(t)$ der Terminal-Normalisierungsfaktor ist.

9. Elektrofahrzeug-Ladesystem (200) nach Anspruch 8, wobei das Einlassterminal (204) nach dem Anlegen von Elektroenergie an das Einlassterminal (204) einen Wechselstrom leitet.

10. Elektrofahrzeug-Ladesystem (200) nach Anspruch 8, wobei das Einlassterminal (204) nach dem Anlegen von Elektroenergie an das Einlassterminal (204) einen Gleichstrom leitet.

**Revendications**

1. Procédé (300) pour déterminer une température de borne d'entrée d'une entrée de charge de véhicule électrique (100) à l'aide d'un dispositif de commande électronique (206), comprenant :

l'obtention d'une valeur de température initiale d'un capteur de température (202) configuré pour mesurer la température d'une borne d'entrée (204) de l'entrée de charge de véhicule électrique (100) via le dispositif de commande électronique (206) avant l'application d'énergie électrique à la borne d'entrée (204) ;

l'obtention d'une valeur de température actuelle du capteur de température (202) via le dispositif de commande électronique (206) à un instant après l'application ($t_0$) d'énergie électrique à la borne d'entrée (204) ;

le calcul de la température de borne d'entrée à l'aide du dispositif de commande électronique (206) à partir de la valeur de température initiale, de la valeur de température actuelle, d'un facteur de normalisation de capteur de température prédéterminé et d'un facteur de normalisation de borne prédéterminé stocké dans un dispositif de mémoire (210) qui est en communication électronique avec le dispositif de commande électronique (206) pour l'instant suivant l'application d'énergie électrique à la borne d'entrée (204) ; et

la régulation de l'application d'énergie électrique à la borne d'entrée (204) à l'aide du dispositif de commande électronique (206) pour maintenir la température de borne d'entrée en dessous d'un seuil prédéterminé sur la base de la température de borne d'entrée calculée,

dans lequel une série temporelle des facteurs de normalisation de capteur de température est préalablement dérivée sur la base de mesures expérimentales simultanées de la valeur de température actuelle à partir du capteur de température (202) et de la température de borne d'entrée, et

dans lequel la température de borne d'entrée (204) est calculée par le dispositif de commande électronique (206) à l'aide de la formule :

$$T_{borne}(t) = T_{capteur}(t_0) + \left(\frac{T_{capteur}(t) - T_{capteur}(t_0)}{NF_{capteur}(t)}\right) * NF_{borne}(t),$$

dans lequel $T_{borne}(t)$ est la température de borne d'entrée, $T_{capteur}(t_0)$ est la valeur de température initiale du capteur de température (202), $T_{capteur}(t)$ est la valeur de température actuelle du capteur de température (202), $NF_{capteur}(t)$ est le facteur de normalisation de capteur de température, et $NF_{borne}(t)$ est le facteur de normalisation de borne.

**2.** Procédé (300) selon la revendication 1, dans lequel le capteur de température (202) est une thermistance à coefficient de température négatif (CTN), dans lequel le procédé (300) comprend en outre :

la détermination et l'enregistrement de la valeur de température actuelle de la thermistance CTN à l'aide de l'équation de Steinhart-Hart tout en enregistrant simultanément une valeur mesurée de la température de borne d'entrée sur une période de temps commençant à un instant initial ($t_0$) lorsque de l'énergie électrique est appliquée à la borne d'entrée (204) ;

la détermination d'un premier delta de température entre les valeurs de température enregistrées de la thermistance CTN sur la période de temps et la valeur de température enregistrée de la thermistance CTN à l'instant initial ($t_0$) et la détermination d'un second delta de température entre la valeur mesurée de la température de borne d'entrée sur la période de temps et la valeur mesurée de la température de borne d'entrée à l'instant initial ($t_0$) ;

l'élaboration d'une équation de modèle RC pour ajuster les première et seconde données delta de température en déterminant des coefficients pour une résistance thermique et une constante de temps pour la thermistance CTN et la borne d'entrée (204) ;

la sélection d'un incrément de pas de temps approprié pour déterminer les première et seconde données delta de température et pour déterminer les coefficients de résistance thermique et de constante de temps pour la thermistance CTN et la borne d'entrée (204) ;

le calcul du facteur de normalisation de capteur de température et du facteur de normalisation de borne en divisant chacune des première et seconde données delta de température par une valeur de réponse à l'état stationnaire de la thermistance CTN ; et

l'enregistrement du facteur de normalisation de capteur de température et du facteur de normalisation de borne pour chaque incrément de pas de temps.

**3.** Procédé (300) selon la revendication 1, dans lequel la borne d'entrée (204) conduit un courant alternatif après l'application d'énergie électrique à la borne d'entrée (204).

**4.** Procédé (300) selon la revendication 1, dans lequel la borne d'entrée (204) conduit un courant continu après l'application d'énergie électrique à la borne d'entrée (204).

**5.** Support lisible par ordinateur contenant des instructions de programme pour déterminer une température de borne d'entrée d'une entrée de charge de véhicule électrique (100), dans lequel l'exécution des instructions de programme par un ou plusieurs processeurs d'un système informatique amène les un ou plusieurs processeurs à effectuer les étapes suivantes :

l'obtention d'une valeur de température initiale d'un capteur de température (202) configuré pour mesurer la température d'une borne d'entrée (204) de l'entrée de charge de véhicule électrique (100) avant l'application d'énergie électrique à la borne d'entrée (204) ;

l'obtention d'une valeur de température actuelle du capteur de température (202) à un instant après l'application d'énergie électrique à la borne d'entrée (204) ;

le calcul de la température de borne d'entrée d'une entrée de charge de véhicule électrique (100) sur la base de la valeur de température initiale, de la valeur de température actuelle, d'un facteur de normalisation de capteur de température prédéterminé et d'un facteur de normalisation de borne prédéterminé pour l'instant après l'application d'énergie électrique à la borne d'entrée (204), dans lequel le facteur de normalisation de capteur de température est contenu dans le support lisible par ordinateur ; et

la régulation de l'application d'énergie électrique à la borne d'entrée (204) pour maintenir la température de borne d'entrée en dessous d'un seuil de température prédéterminé sur la base de la température de borne d'entrée calculée,

dans lequel une série temporelle des facteurs de normalisation de capteur de température est préalablement dérivée sur la base de mesures expérimentales simultanées de la valeur de température actuelle à partir du capteur de température (202) et de la température de borne d'entrée, et

dans lequel la température de borne d'entrée (204) est calculée par le dispositif de commande électronique (206) à l'aide de la formule :

$$T_{borne}(t) = T_{capteur}(t_0) + \left( \frac{T_{capteur}(t) - T_{capteur}(t_0)}{NF_{capteur}(t)} \right) * NF_{borne}(t),$$

dans lequel $T_{borne}(t)$ est la température de borne d'entrée, $T_{capteur}(t_0)$ est la valeur de température initiale du capteur de température (202), $T_{capteur}(t)$ est la valeur de température actuelle du capteur de température (202), $NF_{capteur}(t)$ est le facteur de normalisation de capteur de température, et $NF_{borne}(t)$ est le facteur de normalisation de borne.

6. Support lisible par ordinateur selon la revendication 5, dans lequel une série temporelle des facteurs de normalisation de capteur de température prédéterminés et des facteurs de normalisation de borne est contenue dans le support lisible par ordinateur.

7. Support lisible par ordinateur selon la revendication 6, dans lequel les instructions de programme, les facteurs de normalisation de capteur de température prédéterminés, les facteurs de normalisation de borne et le seuil de température prédéterminé sont contenus dans une partie non volatile du support lisible par ordinateur.

8. Système de charge de véhicule électrique (200), comprenant :

un capteur de température (202) configuré pour mesurer la température d'une borne d'entrée (204) d'une entrée de charge de véhicule électrique (100) ; et
un dispositif de commande électronique (206) configuré pour :

obtenir une valeur de température initiale du capteur de température (202) avant l'application d'énergie électrique à la borne d'entrée (204),
obtenir une valeur de température actuelle du capteur de température (202) à un instant après l'application d'énergie électrique à la borne d'entrée (204) ;
calculer la température de borne d'entrée de la borne d'entrée (204) sur la base de la valeur de température initiale, de la valeur de température actuelle, d'un facteur de normalisation de capteur de température prédéterminé et d'un facteur de normalisation de borne prédéterminé pour l'instant après l'application d'énergie électrique à la borne d'entrée (204), et
réguler l'application d'énergie électrique à la borne d'entrée (204) pour maintenir la température de borne d'entrée en dessous d'un seuil de température prédéterminé sur la base de la température de borne d'entrée calculée,
dans lequel une série temporelle des facteurs de normalisation de capteur de température est préalablement dérivée sur la base de mesures expérimentales simultanées de la valeur de température actuelle à partir du capteur de température (202) et de la température de borne d'entrée, et
dans lequel la température de borne d'entrée (204) est calculée par le dispositif de commande électronique (206) à l'aide de la formule :

$$T_{borne}(t) = T_{capteur}(t_0) + \left( \frac{T_{capteur}(t) - T_{capteur}(t_0)}{NF_{capteur}(t)} \right) * NF_{borne}(t),$$

dans lequel $T_{borne}(t)$ est la température de borne d'entrée, $T_{capteur}(t_0)$ est la valeur de température initiale du capteur de température (202), $T_{capteur}(t)$ est la valeur de température actuelle du capteur de température (202), $NF_{capteur}(t)$ est le facteur de normalisation de capteur de température, et $NF_{borne}(t)$ est le facteur de normalisation de borne.

9. Système de charge de véhicule électrique (200) selon la revendication 8, dans lequel la borne d'entrée (204) conduit un courant alternatif après l'application d'énergie électrique à la borne d'entrée (204).

10. Système de charge de véhicule électrique (200) selon la revendication 8, la borne d'entrée (204) conduit un courant continu après l'application d'énergie électrique à la borne d'entrée (204).

100

FIG. 1

FIG. 2

300 —

31 —

DETERMINE AND RECORD THE CURRENT TEMPERATURE VALUE OF THE TEMPERATURE SENSOR

32 —

DETERMINE A FIRST AND SECOND TEMPERATURE DELTA

33 —

DEVELOP EQUATIONS TO FIT THE FIRST AND SECOND TEMPERATURE DELTA

34 —

CALCULATE THE TEMPERATURE SENSOR AND TERMINAL NORMALIZATION FACTORS

36 —

RECORD THE TEMPERATURE SENSOR AND TERMINAL NORMALIZATION FACTORS

302 —

OBTAIN AN INITIAL TEMPERATURE VALUE OF THE TEMPERATURE SENSOR

304 —

OBTAIN A CURRENT TEMPERATURE VALUE OF THE TEMPERATURE SENSOR

306 —

CALCULATE THE INLET TERMINAL TEMPERATURE

308 —

REGULATE THE APPLICATION OF ELECTRICAL POWER TO THE INLET TERMINAL

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020343675 A1